# EUROPÄISCHE PATENTSCHRIFT

(11) **EP 1 855 899 B1**
(45) Veröffentlichungstag und Bekanntmachung des Hinweises auf die Patenterteilung: **18.09.2013**
(21) Anmeldenummer: 06723304.9
(22) Anmeldetag: 09.03.2006
(51) Int. Cl.: B60G 17/056

(54) **STRASSENBAUMASCHINE**
ROAD-BUILDING MACHINE
ENGIN ROUTIER

(30) Priorität: 10.03.2005 DE 102005011052
(43) Veröffentlichungstag der Anmeldung: 21.11.2007
(73) Patentinhaber: Wirtgen GmbH, 53578 Windhagen (DE)
(72) Erfinder: BERNING, Christian, 53909 Zülpich (DE); SIMMONS, Dieter, 53567 Buchholz (DE); SCHÄFER, Markus, 53567 Asbach (DE)
(74) Vertreter: Oppermann, Frank
(86) Internationale Anmeldenummer: PCT/EP2006/002151
(87) Internationale Veröffentlichungsnummer: WO 2006/094795

(56) Entgegenhaltungen:
- WO-A-97/42377
- FR-A- 2 161 017
- US-A- 4 247 126
- US-A- 5 269 556

## Beschreibung

Die vorliegende Erfindung betrifft eine Straßenbaumaschine, insbesondere eine Straßenfräsmaschine, einen Recycler oder einen Stabilisierer, deren linkes Vor-derrad oder Kettenlaufwerk, rechtes Vorderrad oder Kettenlaufwerk, linkes Hinterrad oder Kettenlaufwerk und rechtes Hinterrad oder Kettenlaufwerk mittels eines Stellgliedes in der Höhe verstellbar ist.

Wenn eine derartige Straßenbaumaschine ein Hindernis beispielsweise mit nur einem Vorderrad überfährt, wird dieses eine Vorderrad um die Höhe des Hindernisses angehoben, während das andere Vorderrad auf der Fahrbahn verbleibt. Dadurch stellt sich die Straßenbaumaschine schräg, wodurch sich auch die Fräswalze der Straßenfräsmaschine bzw. der Fräs- / Mischrotor des Recyclers oder des Stabilisierers schräg stellt. Dieser Effekt wird insbesondere dann als besonders störend empfunden, wenn die Spurweite der Maschine in bezug auf den Radstand relativ klein ist.

Aus dem Stand der Technik sind unterschiedliche Maschinen bekannt, die auf Unebenheiten im Terrain, auf dem sich diese Maschinen bewegen, in adäquater Weise reagieren müssen, damit die Standsicherheit der Maschinen nicht gefährdet wird.

Die US 4,247,126 beschreibt eine Landmaschine, bei der zwei Vorderräder und zwei Hinterräder vorgesehen sind. Jedes einzelne Rad kann in seiner Höhe verstellt werden, wobei zu diesem Zweck an jedem Rad ein Arbeitszylinder vorgesehen ist. Die Arbeitszylinder sind teilweise über entsprechende Leitungen miteinander verbunden, wobei ein Hydrauliksteuerungssystem vorgesehen ist, das derart ausgebildet ist, dass entweder das Vorder- und Hinterrad auf der linken Seite oder das Vorder- und Hinterrad auf der rechten Seite der Landmaschine angehoben bzw. abgesenkt werden können. Auf diese Weise kann die Maschine, wenn sie sich quer zu einem Hang bewegt, gerade ausgerichtet werden.

Aus der FR 2 161 017 A ist ein Fahrwerk für einen Traktor bekannt, bei dem Vorder- und Hinterräder derart mechanisch miteinander gekoppelt sind, dass das linke Vorderrad und das rechte Hinterrad in die selbe Richtung und zu dem rechten Vorderrad und dem linken Hinterrad in entgeizen gesetzter Richtung höhenverstellt werden, wenn eines der Räder angehoben wird. Die mechanische Kopplung sieht sowohl eine Lagerung des linken und rechten Vorderrades bzw. Hinterrades an einer Schwenkachse als auch eine gelenkige Verbindung der vorderen und hinteren Schwenkachsen vor. Bei einer alternativen Ausführungsform des Fahrwerks wird die gelenkige Verbindung der vorderen und hinteren Schwenkachsen durch eine hydraulische Kopplung ersetzt. Gleichwohl verfügt die alternative Ausführungsform über eine mechanische Kopplung der linken und rechten Räder. Es handelt sich als nicht um eine Ausführungsform, bei der sämtliche Räder nur über eine hydraulische Zwangkopplung miteinander verbunden sind. Den Vorder- und Hinterrädern der alternativen Ausführungsform sind insgesamt nur zwei doppelt wirkende Arbeitszylinder zugeordnet, deren Arbeitskammern über Konpelleitungen zur Höhenverstellung der Vorder- und Hinterräder zwangsgekoppelt sind. Auch die alternative Ausführungsform setzt daher die Lagerung des linken und rechten Vorderrades bzw. Hinterrades an einer Schwenkachse voraus.

Aus der EP 0 836 659 B1 ist ein Fahrwerk einer Straßenfräsmaschine bekannt, das einen auf zwei Vorderrädern und zwei Hinterrädern getragenen Rahmen aufweist. Die Vorderräder des bekannten Fahrwerkes sind so aufgehängt, dass sie Änderungen in der Querneigung des Straßenbelages gegensinnig und in gleichem Maße folgen können. Um die beiden Vorderräder in einer Weise zu koppeln, dass sich diese gegensinnig und in gleichem Maße bewegen, sind die Führungen der beiden Vorderräder über eine entsprechende mechanische oder hydraulische Kopplungseinrichtung miteinander verbunden. Diese Anordnung, die im Stand der Technik häufig Verwendung findet, wird auch als Pendelachse bezeichnet.

Für die Verbesserung des Fahrdynamik für Fahrzeuge, insbesondere bei hohen Geschwindigkeiten, schlägt die US 5 269 556 die gegenläufige Kopplung von Kolben-/Zylinderarnordnungen vor, mit denen die Räder am Fahrzeugrahmen gelenkig aufgehängt sind.

Das in der EP 0 940 274 A2 beschriebene Straßenfräsmaschine weist ebenfalls zwei Vorderräder auf, die gegensinnig und um gleiche Beträge höhenverstellbar sind. Auf Grund der Zwangskopplung der Vorderräder kann das bekannte Fahrwerk auf Erhebungen oder Absenkungen auf einer Seite der Fahrbahn reagieren, indem ein Vorderrad abgesenkt bzw. angehoben wird, während das andere Vorderrad einen gegensinnige Bewegung ausführt. Wenn beispielsweise auf einer Seite eine Erhebung der Höhe a vorliegt, hebt sich das entsprechende Vorderrad in Relation zu der Maschine um a/2 an, während sich das andere Vorderrad in Relation zu dem Fahrwerk um a/2 absenkt. Somit wird die Maschine insgesamt um nur a/2 angehoben, was die Handhabbarkeit der Maschine verbessert und deren Fahrkomfort erhöht.

Bei dem zuvor beschriebenen Stand der Technik besteht der Nachteil, dass es nicht möglich ist, sowohl die Vorderräder als auch die Hinterräder auf die beschriebene Weise zwangsgekoppelt pendelnd zu lagern, da dies zu einer instabilen Lage der Maschine führen würde.

Wenn sich die Maschine in Fahrt befindet und auf einer geraden Bahn bewegt, wird jedes Hindernis in Form einer Erhebung oder Absenkung auf einer Seite der Maschine nicht nur von der pendelnd gelagerten Vorderachse, sondern auch von der nicht pendelnd gelagerten Hinterachse überfahren. Im Bereich der nicht pendelnd gelagerten Räder wirkt das Hindernis dann in seinem ganzen Ausmaß auf den Fahrzeugrahmen ein. Hierdurch verschlechtert sich die Standsicherheit dieser Maschinen. Außerdem verschlechtert sich bezüglich der Straßenfräsmaschine auch das Fräsergebnis.

Der vorliegenden Erfindung liegt somit die Aufgabe zu Grunde, die Standsicher-heit der eingangs genannten Straßenbaumaschinen gegenüber dem genannten Stand der Technik zu verbessern.

Darüber hinaus liegt der vorliegenden Erfindung die Aufgabe zugrunde, den Ausgleich sowohl von Querneigungen der eingangs genannten Straßenbaumaschinen, die sich beim Überfahren von Hindernissen einstellen und das Fräsbild dieser Straßenbaumaschinen negativ beeinflussen, als auch von Unebenheiten in Längsrichtung dieser Straßenbaumaschinen zu verbessern.

Die Lösung dieser Aufgabe erfolgt erfindungsgemäß mit den in den unabhängigen Ansprüchen 1 und 10 angegebenen Merkmalen. Vorteilhafte Ausführungsformen der Erfindung sind Gegenstand der Unteransprüche.

Die erfindungsgemäße Straßenbaumaschine weist ein linkes Vorderrad oder Kettenlaufwerk, ein rechtes Vorderrad oder Kettenlaufwerk, ein linkes Hinterrad oder Kettenlaufwerk und ein rechtes Hinterrad oder Kettenlaufwerk auf. Wenn nachfolgend von einem Vorderrad die Rede ist, wird darunter auch ein Kettenlaufwerk verstanden. Jedem der genannten Räder ist jeweils ein Stellglied zugeordnet, mit deren Hilfe das jeweilige Rad mit dem Fahrwerk der Straßenbaumaschine verbunden und relativ zum Rahmen bzw. Chassis der Straßenbaumaschine in der Höhe verstellbar ist. Dadurch kann der Rahmen relativ zum Terrain in der Höhe verstellt und ausgerichtet werden. Nachfolgend wird in diesem Zusammenhang einfach von einer Höhenverstellung der Räder gesprochen. Die Stellglieder sind erfindungsgemäß starr mit dem Fahrwerk der Straßenbaumaschine verbunden und miteinander zwangsgekoppelt. Die Zwangskopplung ist dabei derart ausgebildet, dass das linke Vorderrad und das rechte Hinterrad in entgegen gesetzter Richtung zu dem rechten Vorderrad und dem linken Hinterrad höhenverstellt werden, wobei das linke Vorderrad und das rechte Hinterrad in die selbe Richtung höhenverstellt werden.

Unter der erfindungsgemäßen Straßenbaumaschine ist insbesondere eine Straßenfräsmaschine, ein Recycler oder ein Stabilisierer zu verstehen. Derartige Straßenbaumaschinen sind dem Fachmann bekannt, so dass im folgenden von einer allgemeinen Beschreibung dieser Straßenbaumaschinen in Bezug auf deren Aufbau und Funktionsweise abgesehen wird.

Wenn alle Stellglieder gleich ausgebildet sind, beispielsweise als Stellglieder Zylinder mit gleichen Querschnitten vorgesehen werden, erfolgt die Höhenverstellung bei allen Rädern im wesentlichen um gleiche Beträge. Darunter ist zu verstehen, dass die Beträge nur theoretisch exakt gleich sein können, d.h. unter der Voraussetzung, dass beispielsweise der Maschinenrahmen unendlich steif ist, die Aufstandsfläche total unnachgiebig ist und das Öl völlig inkompressibel ist. In der Praxis werden aber kleine Abweichungen nicht zu vermeiden sein. Es ist aber auch möglich, die Stellglieder unterschiedlich auszubilden, beispielsweise Zylinder mit unterschiedlichen Durchmessern vorzusehen, wodurch sich das Kippverhalten der Maschine entsprechend beeinflussen lässt.

Mit der erfindungsgemäßen Zwangskopplung gewährleistet die erfindungsgemäße Straßenbaumaschine eine hohe Standsicherheit, was insbesondere bei einer Straßenbaumaschine mit einer schmalen Spurweite zum Tragen kommt. Aufgrund der erforderlichen Transportabmessungen ist die Spurweite im allgemeinen relativ schmal. Die erfindungsgemäße Straßenbaumaschine verwirklicht quasi eine pendelnde Lagerung von sowohl der Vorder- als auch der Hinterachse, wodurch die Standsicherheit entscheidend verbessert wird. Daher ist die Baumaschine in der Lage, Flächen mit einer relativ großen Neigung sicher zu befahren, ohne dass die Gefahr des Umstürzens der Maschine besteht. Des weiteren wird die zulässige Höhe eines Hindernisses, das mit nur einem Rad der Maschine überfahren werden kann, im Vergleich zum Stand der Technik verdoppelt. Dabei ist unter zulässiger Höhe eines Hindernisses die Höhe zu verstehen, die durch das Anheben bzw. Absenken aller Räder der Baumaschine gerade noch so kompensiert werden kann, dass alle Räder auf der Fahrbahn aufstehen, ohne dass bei einem der Räder der Punkt erreicht wird, an dem das Rad vollständig ausgefahren bzw. eingefahren ist, d.h. die Maschine "auf Block" geht.

Bei der erfindungsgemäßen Straßenbaumaschine sind die Stellglieder als doppelt wirkende Arbeitszylinder mit einer ersten und einer zweiten Arbeitskammer ausgebildet, die mit einem Druckmedium befüllt sind, wobei die Arbeitszylinder über Koppelleitungen miteinander verbunden sind. Als Druckmedium kann beispielsweise ein Hydrauliköl in Frage kommen.

Gemäß einer vorteilhaften Ausführungsform der erfindungsgemäßen Straßenbaumaschine sind die Arbeitszylinder derart angeordnet, dass das Befüllen der ersten Arbeitskammer bzw. das Entleeren der zweiten Arbeitskammer ein Absenken des Rades bewirkt, während das Befüllen der zweiten Arbeitskammer bzw. das Entleeren der ersten Arbeitskammer ein Anheben des Rades relativ zum Rahmen bewirkt.

In einer weiteren bevorzugten Ausführungsform der erfindungsgemäßen Straßenbaumaschine ist ein erster Arbeitszylinder zur Höhenverstellung des linken Vorderrades, ein zweiter Arbeitszylinder zur Höhenverstellung des rechten Vorderrades, ein dritter Arbeitszylinder zur Höhenverstellung des linken Hinterrades und ein vierter Arbeitszylinder zur Höhenverstellung des rechten Hinterrades vorgesehen.

Um eine besonders einfache Zwangskopplung gemäß der Erfindung zu schaffen, sind in einer besonders bevorzugten Ausführungsform der erfindungsgemäßen Straßenbaumaschine die erste Arbeitskammer des ersten Arbeitszylinders mit der ersten Arbeitskammer des zweiten Arbeitszylinders, die zweite Arbeitskammer des zweiten Arbeitszylinders mit der zweiten Arbeitskammer des vierten Arbeitszylinder, die erste Arbeitskammer des vierten Arbeitszylinders mit der ersten Arbeitskammer des dritten Arbeitszylinders und die zweite Arbeitskammer des dritten Arbeitszylinders mit der zweiten Arbeitskammer des ersten Arbeitszylinders über Koppelleitungen verbunden.

Da die Zwangskopplung jedoch auch durch Verbinden der jeweils anderen Arbeitskammem realisierbar ist, sind in einer weiteren vorteilhaften Ausfuhrungsform der erfindungsgemäßen Straßenbaumaschine die zweite Arbeitskammer des ersten Arbeitszylinders mit der zweiten Arbeitskammer des zweiten Arbeitszylinders, die erste Arbeitskammer des zweiten Arbeitszylinders mit der ersten Arbeitskammer des vierten Arbeitszylinder, die zweite Arbeitskammer des vierten Arbeitszylinders mit der zweiten Arbeitskammer des dritten Arbeitszylinders und die erste Arbeitskammer des dritten Arbeitszylinders mit der ersten Arbeitskammer des ersten Arbeitszylinders über Koppelleitungen verbunden.

In einer weiteren vorteilhaften Ausführungsform der erfindungsgemäßen Straßenbaumaschine sind der erste und der zweite Arbeitszylinder über eine erste Koppelleitung, der zweite und der vierte Arbeitszylinder über eine zweite Koppelleitung, der vierte und der dritte Arbeitszylinder über eine dritte Koppelleitung und der dritte und der erste Arbeitszylinder über eine vierte Koppelleitung miteinander verbunden.

In einer besonders bevorzugten Ausführungsform der erfindungsgemäßen Straßenbaumaschine bilden die Arbeitszylinder zusammen mit den Koppelleitungen ein geschlossenes System aus. Dies schließt jedoch nicht aus, das in einem anderen Betriebsmodus des Fahrwerkes auch noch andere Hydraulikbestandteile hinzugeschaltet werden können.

Bei einer Ausführungsform der erfindungsgemäßen Straßenbaumaschine gemäß Anspruch 10 sind die Koppelleitungen mit Hilfe einer Ventilsteuerung über Arbeitsleitungen gegebenenfalls unter kurzzeitiger Aufhebung der Zwangskopplung mit einer Druckmediumquelle und/oder einem Druckmediumsumpf verbunden. Hierdurch können unabhängig von der erfindungsgemäßen Zwangskopplung weitere Einstellungen an den Vorder- bzw. Hinterrädern vorgenommen werden, was den Einsatz des Fahrwerkes auf Geländen unterschiedlichster Form ermöglicht. Es ist dadurch beispielsweise möglich, die erfindungsgemäße Straßenbaumaschine waagerecht auszurichten, obwohl sie auf einem Gelände mit Querneigung steht, um dieses Gelände durch die Bearbeitung gleichzeitig einzuebnen.

Unter einer Druckmediumquelle kann beispielsweise eine Ölpumpe verstanden werden, wobei der Druckmediumsumpf von abgeführtem Öl innerhalb eines Auffangbehälters gebildet sein kann.

In einer weiteren vorteilhaften Ausführungsform der erfindungsgemäßen Straßenbaumaschine ist die Ventilsteuerung derart ausgebildet, dass alle Räder in einem ersten Betriebsmodus angehoben und in einem zweiten Betriebsmodus abgesenkt werden, wobei dies jeweils um den selben Betrag erfolgt.

In einer weiteren besonders vorteilhaften Ausführungsform der erfindungsgemäßen Straßenbaumaschine ist die Ventilsteuerung derart ausgebildet, dass jedes einzelne Rad in einem ersten Betriebsmodus der Ventilsteuerung angehoben und in einem zweiten Betriebsmodus der Ventilsteuerung abgesenkt werden kann.

In einer Abwandlung der zuvor genannten Ausführungsform der erfindungsgemäßen Straßenbaumaschine wird lediglich eines der beiden Vorderräder in einem ersten Betriebsmodus angehoben und in einem zweiten Betriebsmodus abgesenkt. Dies bedeutet, dass die individuelle Einstellbarkeit der Räder nur die beiden Vorderräder betrifft.

Gemäß einer weiteren vorteilhaften Ausführungsform der erfindungsgemäßen Straßenbaumaschine ist die Ventilsteuerung derart ausgebildet, dass in einem bestimmten Betriebsmodus der Ventilsteuerung das linke und rechte Vorderrad oder das linke und rechte Hinterrad oder das linke Hinter- und Vorderrad oder das rechte Hinter- und Vorderrad in der selben Richtung und um den selben Betrag höhenverstellt werden.

In einer besonders vorteilhaften Ausführungsform der erfindungsgemäßen Straßenbaumaschine kann die Ventilsteuerung in einem die Zwangskopplung wiederherstellenden Betriebsmodus betrieben werden. Bei dieser Ausführungsform ist somit gewährleistet, dass der Benutzer dieZwangskopplung auch aufheben kann, um ergänzende Einstellungen an den einzelnen Rädern vorzunehmen, bevor er wieder in den Zwangskopplungsmodus wechselt.

Im Folgenden wird die Erfindung an Hand von Ausführungsbeispielen unter Bezugnahme auf die beigefügten Figuren eingehender erläutert.

Es zeigen:
- Fig. 1: eine schematische Darstellung einer ersten Ausführungsform der erfindungsgemäßen Straßenbaumaschine,
- Fig. 2: eine schematische Darstellung einer zweiten Ausführungsform der erfindungsgemäßen Straßenbaumaschine,
- Fig. 3: eine schematische Darstellung einer dritten Ausführungsform der erfindungsgemäßen Straßenbaumaschine,
- Fig. 4: eine schematische Darstellung einer vierten Ausführungsform der erfindungsgemäßen Straßenbaumaschine,
- Fig. 5: eine schematische Darstellung einer fünften Ausführungsform der erfindungsgemäßen Straßenbaumaschine,
- Fig. 6a, 6b, 6c: das Fahrverhalten der erfindungsgemäßen Straßenbaumaschine im Vergleich zum Stand der Technik und
- Fig. 7: eine schematische Darstellung der erfindungsgemäßen Straßenbaumaschine zur Veranschaulichung ihrer Standsicherheit.

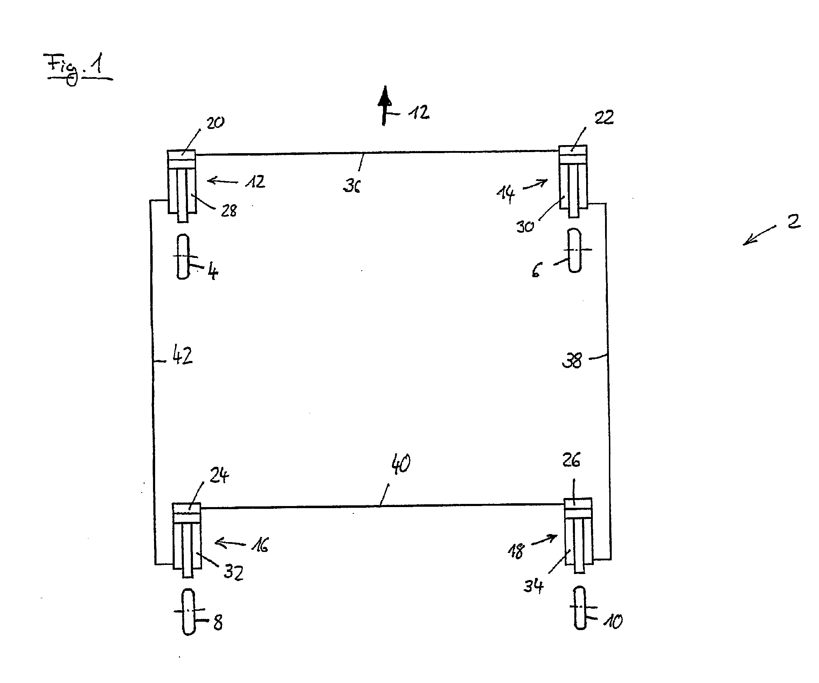

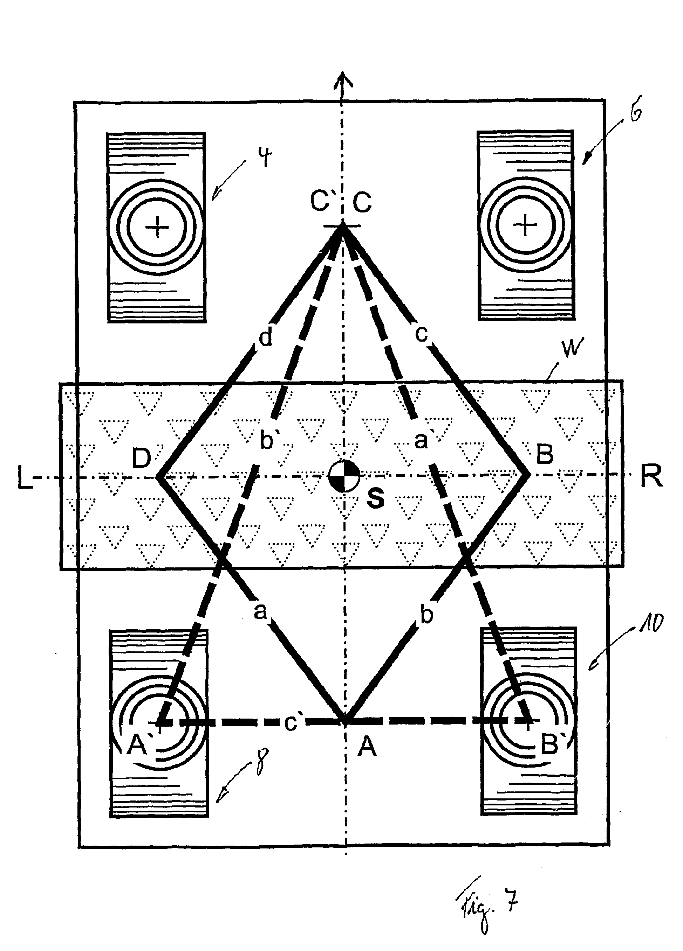

Fig. 1 zeigt eine erste Ausführungsform der erfindungsgemäßen Straßenbaumaschine, die in Form der eingangs genannten Straßenfräsmaschine eine Fräswalze W aufweist (Fig. 7), die zwischen den Vorder- und den Hinterrädern derselben angeordnet ist. Dagegen weist die erfindungsgemäße Straßenbaumaschine in Form des eingangs genannten Recyclers oder Stabilisierers einen Fräs- / Mischrotor W auf (Fig. 7), der zwischen den Vorder- und den Hinterrädern der Straßenbaumaschine angeordnet ist.

Eine derartige Fräswalze bzw. ein derartiger Fräs- / Mischrotor ist dem Fachmann als solche bzw. solcher bekannt, so dass an dieser Stelle von einer genauen Beschreibung der Fräswalze bzw. des Fräs- / Mischrotors abgesehen wird.

Die erfindungsgemäße Straßenbaumaschine weist ein linkes Vorderrad 4, ein rechtes Vorderrad 6, ein linkes Hinterrad 8 und ein rechtes Hinterrad 10 auf, die in Fig. 1 lediglich angedeutet sind. Die Räder 4, 6, 8, 10 ermöglichen eine Bewegung des Fahrwerkes in Fahrtrichtung, die in Fig. 1 an Hand des Pfeils 12 angedeutet ist. Jedem Rad 4, 6, 8, 10 ist ein Stellglied zugeordnet, welche die Höhenverstellung des jeweiligen Rades 4, 6, 8, 10 ermöglicht. Auf die Darstellung der Verbindung zwischen dem Stellglied und dem einzelnen Rad wurde aus Gründen der Übersichtlichkeit verzichtet. Hier kann beispielsweise eine mit dem Stellglied in Verbindung stehende Führungseinrichtung vorgesehen sein, an deren Ende das entsprechende Rad 4, 6, 8, 10 über eine Konsole aufgehängt ist.

Die Stellglieder sind in der dargestellten Ausführungsform als Arbeitszylinder ausgebildet, wobei alle Arbeitszylinder bezogen auf ihren Aufbau und ihre Abmessungen bei dem Ausführungsbeispiel identisch sind. So ist dem linken Vorderrad 4 ein erster Arbeitszylinder 12, dem rechten Vorderrad 6 ein zweiter Arbeitszylinder 14, dem linken Hinterrad 8 ein dritter Arbeitszylinder 16 und dem rechten Hinterrad ein vierter Arbeitszylinder 18 zugeordnet. Es ist aber auch eine Anordnung von Arbeitszylindern unterschiedlicher Kolbendurchmesser möglich. Durch die Anordnung von unterschiedlichen Zylindern an der Vorder- bzw. Hinterachse kann die Charakteristik der Straßenbaumaschine beeinflusst werden.

Die Arbeitszylinder 12, 14, 16, 18 sind als doppelt wirkende Arbeitszylinder ausgebildet, so dass die Arbeitszylinder 12, 14, 16, 18 jeweils eine kolbenseitige erste Arbeitskammer 20, 22, 24, 26 und eine kolbenstangenseitige zweite Arbeitskammer 28, 30, 32, 34 aufweisen, die durch den im Zylinder befindlichen Kolben voneinander getrennt sind. Die ersten und zweiten Arbeitskammern 20, 22, 24, 26, 28, 30, 32, 34 sind mit einem Druckmedium gefüllt, bei dem es sich im vorliegenden Fall um Hydrauliköl handelt. Für alle Arbeitszylinder 12, 14, 16, 18 gilt, dass ein Befüllen der ersten Arbeitskammer 20, 22, 24, 26 oder ein Entleeren der zweiten Arbeitskammer 28, 30, 32, 34 ein Absenken des zugehörigen Rades 4, 6, 8, 10 bewirkt, während das Befüllen der zweiten Arbeitskammer 28, 30, 32, 34 oder das Entleeren der ersten Arbeitskammer 20, 22, 24, 26 ein Anheben des Rades 4, 6, 8, 10 bewirkt.

Die Arbeitszylinder 12, 14, 16, 18 sind über Koppelleitungen miteinander verbunden. So sind der erste und der zweite Arbeitszylinder 12 und 14 über eine erste Koppelleitung 36, der zweite und der vierte Arbeitszylinder 14 und 18 über eine zweite Koppelleitung 38, der vierte und der dritte Arbeitszylinder 18 und 16 über eine dritte Koppelleitung 40 und der dritte und der erste Arbeitszylinder 16 und 12 über eine vierte Koppelleitung 42 miteinander verbunden.

Die erste Koppelleitung 36 verbindet die erste Arbeitskammer 20 des ersten Arbeitszylinders 12 mit der ersten Arbeitskammer 22 des zweiten Arbeitszylinders 14. Die zweite Koppelleitung 38 verbindet die zweite Arbeitskammer 30 des zweiten Arbeitszylinders 14 mit der zweiten Arbeitskammer 34 des vierten Arbeitszylinders 18. Die dritte Koppelleitung 40 verbindet die erste Arbeitskammer 26 des vierten Arbeitszylinders 18 mit der ersten Arbeitskammer 24 des dritten Arbeitszylinders 16. Die vierte Koppelleitung 42 verbindet die zweite Arbeitskammer 32 des dritten Arbeitszylinders 16 mit der zweiten Arbeitskammer 28 des ersten Arbeitszylinders 12. Die Arbeitszylinder 12, 14, 16, 18 bilden zusammen mit den Koppelleitungen 36, 38, 40, 42 ein geschlossenes System aus.

Nachfolgend wird die Funktionsweise der erfindungsgemäßen Straßenbaumaschine aus Fig. 1 beschrieben. Fährt die erfindungsgemäße Straßenbaumaschine beispielsweise mit dem linken Vorderrad 4 des Fahrwerkes 2 über ein Hindernis beispielsweise einer Höhe von 400 mm, so wird der Kolben in dem ersten Arbeitszylinder 12 auf Grund der Gewichtskraft des Fahrzeugs um 100 mm eingefahren. Somit wird das Druckmedium aus der ersten Arbeitskammer 20 des ersten Arbeitszylinders 12 über die erste Koppelleitung 36 in die erste Arbeitskammer 22 des zweiten Arbeitszylinders 14 gedrückt. Dabei wird das Druckmedium aus der zweiten Arbeitskammer 32 des dritten Arbeitszylinders 16 über die vierte Koppelleitung 42 in die zweite Arbeitskammer 28 des ersten Arbeitszylinders 12 gedrückt. Auf Grund der Zwangskopplung werden die Kolben in dem zweiten und dritten Arbeitszylinder 14, 16 in entgegen gesetzter Richtung zu dem Kolben des ersten Arbeitszylinders 12 und um den gleichen Betrag, d.h. 104 mm bewegt. Da der zweite und dritte Arbeitszylinder 14, 16 wiederum über die zweite und dritte Koppelleitung 38, 40 mit dem vierten Arbeitszylinder 18 auf die oben beschriebene Weise verbunden sind, bewirkt dies, dass der Kolben in dem vierten Arbeitszylinder 18 in die selbe Richtung und um den gleichen Betrag wie der Kolben des ersten Arbeitszylinders 12 bewegt wird. Somit wird das linke Vorderrad 4 und das rechte Hinterrad 10 in entgegen gesetzter Richtung zu dem rechten Vorderrad 6 und dem linken Hinterrad 8 höhenverstellt, wobei das linke Vorderrad 4 und das rechte Hinterrad 10 in die selbe Richtung höhenverstellt werden und die Höhenverstellung bei allen Rädern 4, 6, 8, 10 um gleiche Beträge erfolgt. Es sei bemerkt, das die Kolben der Zylinder nur um 100 mm verfahren werden, während die Höhe des Hindernisses 400 mm beträgt, wodurch Fahrkomfort und Standsicherheit verbessert werden. Dabei wird das Gesamtniveau der Straßenbaumaschine bei diesem Ausführungsbeispiel um 100 mm angehoben.

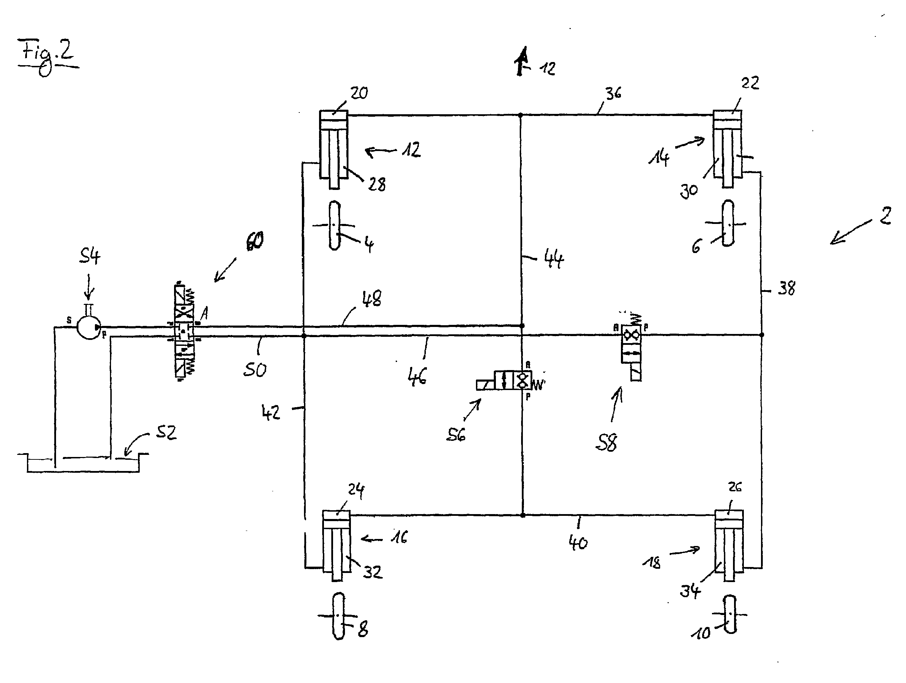

Nachfolgend werden unter Bezugnahme auf die Fig. 2 bis 4 weitere Ausführungsformen der erfindungsgemäßen Straßenbaumaschine beschrieben, die alle die selbe grundlegende Struktur und Funktionsweise haben, wie sie unter Bezugnahme auf Fig. 1 beschrieben wurde, so dass gleiche Teile mit gleichen Bezugszeichen versehen sind und die obige Beschreibung entsprechend gilt. Aus diesem Grund wird nachfolgend lediglich auf die zusätzlichen Merkmale der weiteren Ausführungsformen eingegangen.

Bei der in Fig. 2 gezeigten zweiten Ausführungsform ist die erste Koppelleitung 36 mit der dritten Koppelleitung 40 über eine erste Verbindungsleitung 44 verbunden. Ferner ist die zweite Koppelleitung 38 mit der vierten Koppelleitung 42 über eine zweite Verbindungsleitung 46 verbunden. Es ist darüber hinaus eine erste Arbeitsleitung 48, die mit der ersten Verbindungsleitung 44 verbunden ist, und eine zweite Arbeitsleitung 50 vorgesehen, die mit der zweiten Verbindungsleitung 46 verbunden ist. Die erste und zweite Arbeitsleitung 48, 50 münden in einen Druckmediumsumpf, wobei in der ersten Arbeitsleitung 48 ferner eine Druckmediumquelle 54 in Form einer Ölpumpe vorgesehen ist.

Die zweite Ausführungsform weist ferner eine Ventilsteuerung auf, die ein erstes Wegeventil 56 in der ersten Verbindungsleitung 44, ein zweites Wegeventil 58 in der zweiten Verbindungsleitung 46 und ein drittes Wegeventil 60 in den Arbeitsleitungen 48, 50 umfasst. Wird das dritte Wegeventil 60 in die Stellung a gebracht, während das erste und das zweite Wegeventil 56, 58 geöffnet wird, so strömt das Druckmedium von der Druckmediumquelle 54 über die entsprechenden Leitungen in die zweite Arbeitskammer 28, 30, 32, 34 der Arbeitszylinder 12, 14, 16, 18. Als Reaktion wird das Druckmedium aus der ersten Arbeitskammer 20, 22, 24, 26 der Arbeitszylinder 12, 14, 16,18 herausgedrückt und über die entsprechenden Leitungen in den Druckmediumsumpf 52 abgeleitet. In diesem ersten Betriebsmodus ist die zuvor beschriebene Zwangskopplung demzufolge kurzzeitig aufgehoben und die Räder 4, 6, 8, 10 werden zu gleichen Beträgen angehoben. In einem zweiten Betriebsmodus, bei dem das dritte Wegeventil 60 die Stellung B einnimmt, während das erste und das zweite Wegeventil 56, 58 geöffnet ist, kommt es umgekehrt zu einer Absenkung der Räder 4, 6, 8, 10 zu gleichen Beträgen. Durch Schließen des ersten, zweiten und dritten Wegeventils 56, 58, 60 - wie dies in Fig. 2 dargestellt ist - kann die Ventilsteuerung wieder in einen Betriebsmodus gebracht werden, bei dem die zuvor beschriebene Zwangskopplung hergestellt ist.

Die Wegeventile sind vorzugsweise elektromechanisch betätigte Ventile. Die zur Betätigung der Ventile erforderlichen Einrichtungen sind dem Fachmann allgemein bekannt. Vorzugsweise sind die Ventile federnd vorgespannt, so dass sie nach der Höhenkorrektur der Baumaschine ihre Ausgangsstellung wieder einnehmen, sobald sie nicht mehr angesteuert werden. Dann verhält sich die Straßenbaumaschine wie im ersten Ausführungsbeispiel.

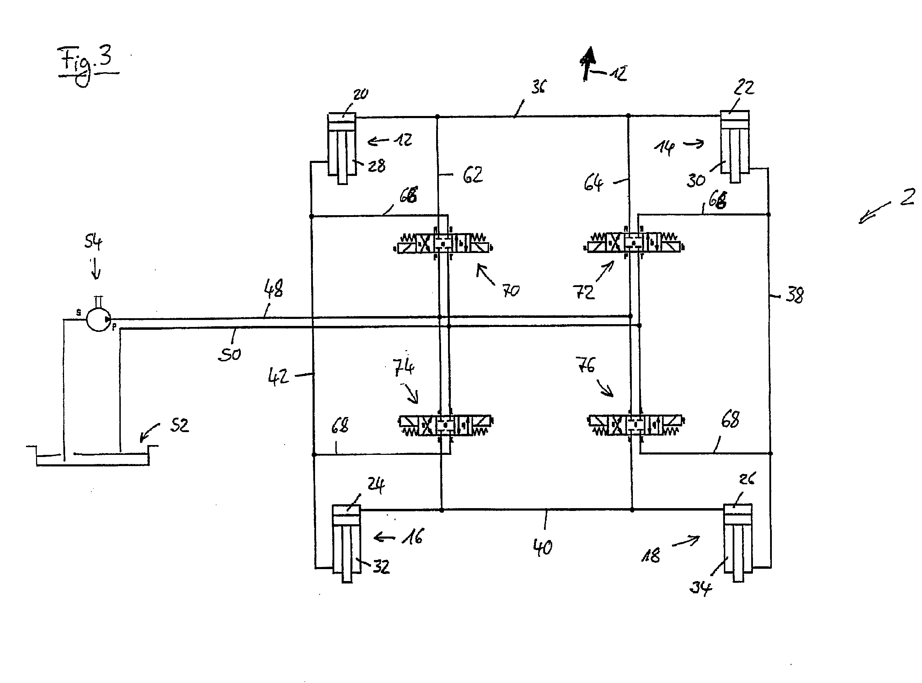

Fig. 3 zeigt eine dritte Ausführungsform der erfindungsgemäßen Straßenbaumaschine, wobei die dritte Ausführungsform der zweiten und ersten Ausführungsform ähnelt, so dass nachfolgend gleiche Bezugszeichen für gleiche Teile verwendet werden, wobei die vorangehende Beschreibung entsprechend gilt und im Folgenden lediglich auf die Unterschiede zu den zuvor beschriebenen Ausführungsformen eingegangen wird. Diese Ausführungsform erlaubt die individuelle Ansteuerung aller Räder, so dass es möglich ist, eine Grundeinstellung sowohl für die Quer- als auch Längsneigung der Baumaschine exakt vorzugeben.

Bei der in Fig. 3 gezeigten dritten Ausführungsform ist die erste Koppelleitung 36 mit der dritten Koppelleitung 40 über eine erste und zweite Verbindungsleitung 62, 64 verbunden, die wiederum mit der Arbeitsleitung 48 verbunden sind. Ferner ist die zweite Koppelleitung 38 mit der vierten Koppelleitung 42 über eine dritte und vierte Verbindungsleitung 66, 68 verbunden, die wiederum mit der Arbeitsleitung 50 in Verbindung stehen. Die Verbindungsleitungen 62, 64, 66, 68 münden mit einem Ende jeweils in der Nähe, vorzugsweise in unmittelbarer Nähe des jeweiligen Arbeitszylinders 12, 14, 16, 18 in die entsprechende Koppelleitung 36, 38, 40, 42. Im Gegensatz zur zweiten Ausführungsform ist hier jeweils ein Wegeventil 70, 72, 74, 76, das dem dritten Wegeventil 60 der zweiten Ausführungsform entspricht, in einer dem jeweiligen Arbeitszylinder 12, 14, 16, 18 zugeordneten Weise in den Verbindungsleitungen 62, 64, 66, 68 vorgesehen. Auf diese Weise können die einzelnen Arbeitszylinder 12, 14, 16, 18 derart betätigt werden, dass einzelne Räder 4, 6, 8, 10 unabhängig voneinander in einem ersten Betriebsmodus der Ventilsteuerung angehoben und in einem zweiten Betriebsmodus abgesenkt werden können.

In Abhängigkeit von der Ansteuerung der einzelnen Wegeventile 70, 72, 74, 76 wird der kolbenstangenseitigen Arbeitskammer bzw. kolbenseitigen Arbeitskammer des dem Wegeventil jeweils zugeordneten Zylinders 12, 14, 16, 18 Öl zugeführt und entsprechend von der Gegenseite abgeführt, so dass der Kolben ein- bzw. ausgefahren wird, wodurch die Baumaschine auf der jeweiligen Ecke angehoben bzw. abgesenkt wird. Dabei nimmt das unter Druck stehende Öl immer den Weg des geringsten Widerstandes. Selbst wenn ein Teil des Öls den Weg über alle anderen Zylinder nähme, anstatt über den Zylinder, der dem angesteuerten Wegeventil zugeordnet ist, sind die Auswirkungen auf die anderen Zylinder von untergeordneter Wirkung. Denn die Kolben der unmittelbar benachbarten Zylinder fahren um den entsprechenden Anteil in die selbe Richtung, während der Kolben des diagonal gegenüberliegenden Zylinders eben diesen anteiligen Betrag in die entgegengesetzte Richtung fährt. Wenn der Kolben des Zylinders 12 vorne links beispielsweise um 200 mm angehoben werden soll, und unter der Annahme, dass 10 % der dafür benötigten Menge an Öl in den Zylinder 14 vorne rechts fließen, werden dadurch der Kolben des Zylinders 12 vorne links statt der erwarteten 200 mm lediglich um 180 mm eingefahren, der Kolben vorne rechts und der Kolben hinten links um 20 mm ebenfalls eingefahren und der Kolben hinten rechts um 20 mm ausgefahren. Folglich wird die linke Ecke der Baumaschine nicht um die erwarteten 200 mm abgesenkt, sondern nur um 180 mm. Im Übrigen bewirkt das "fehlgeleitete" Öl aber eine umgekehrte Bewegung in der diagonal gegenüberliegenden Ecke, d.h. "nur 180 mm" vorne links, aber dafür 20 mm in der entgegengesetzten Richtung hinten rechts. Der Bediener kann dann den Betriebsmodus so lange betätigen, bis das gewünschte Maß, beispielsweise 200 mm, erreicht ist. Gleiches gilt für das Anheben bzw. Absenken der anderen Ecken der Baumaschine. Hierfür ist insbesondere entscheidend, dass die jeweiligen Verbindungsleitungen 62, 64, 66, 68 mit einem Ende jeweils in der Nähe des zugeordneten Arbeitszylinders 12, 14, 16, 18 in die entsprechende Koppelleitung 36, 38, 40, 42 münden.

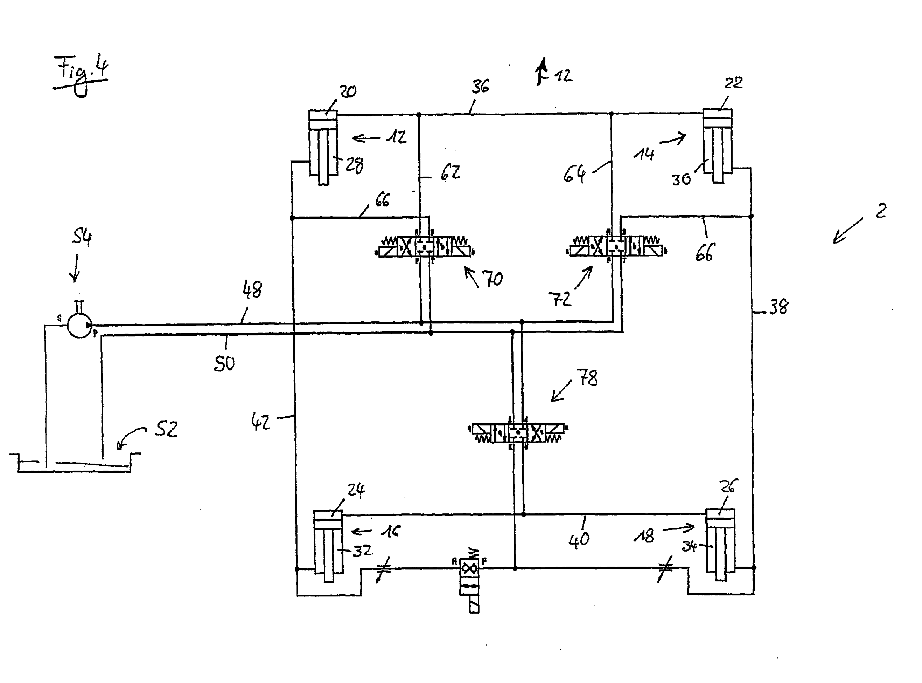

Fig. 4 zeigt eine vierte Ausführungsform der erfindungsgemäßen Straßenbaumaschine, wobei die vierte Ausführungsform der dritten, zweiten und ersten Ausführungsform ähnelt, so dass nachfolgend gleiche Bezugszeichen für gleiche Teile verwendet werden, wobei die vorangehende Beschreibung entsprechend gilt und im Folgenden lediglich auf die Unterschiede zu den zuvor beschriebenen Ausführungsformen eingegangen wird. Bei diesem Ausführungsbeispiel können nur die beiden Vorderräder individuell in der Höhe eingestellt werden. Im Gegensatz zur dritten Ausführungsform kommt an Stelle der beiden Wegeventile 74, 76 nur noch ein Wegeventil 78 zum Einsatz, das den beiden Arbeitszylindern 16 und 18 gleichermaßen zugeordnet ist. Somit sind bei der vierten Ausführungsform durch entsprechende Einstellung des Wegeventils 78 die beiden Hinterräder 8, 10 nur noch gemeinsam höhenverstellbar, während die beiden Vorderräder 4, 6 weiterhin individuell höhenverstellbar sind.

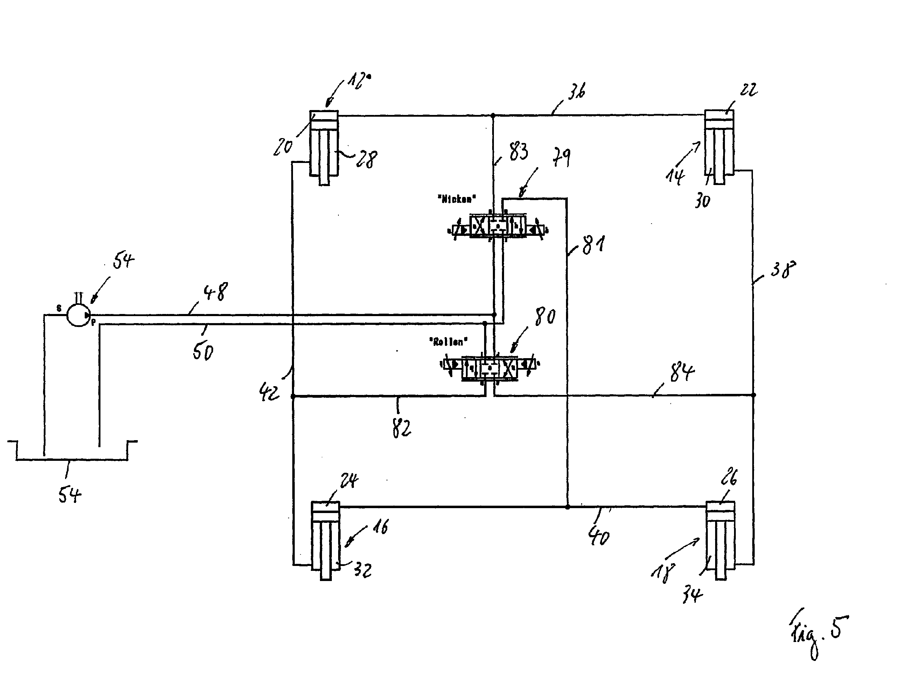

Fig. 5 zeigt eine schematische Darstellung einer vierten Ausführungsform der erfindungsgemäßen Straßenbaumaschine, wobei wieder gleiche Bezugszeichen für gleiche Teile verwendet werden. Dieses Ausführungsbeispiel des Fahrwerks erlaubt entweder ein "Nicken" oder ein "Rollen" der Maschine. Beim "Nicken" der Maschine werden beide Vorderräder 4, 6 angehoben bzw. abgesenkt, während beide Hinterräder 8, 10 um den selben Betrag in entgegen gesetzter Richtung abgesenkt bzw. angehoben werden. Die Querneigung der Maschine bleibt dabei unverändert. Wenn beispielsweise die mechanisch angetriebene Fräswalze W (Fig. 7) oder der mechanisch angetriebener Fräs- und Mischrotor W (Fig. 7) idealer Weise in der Mitte der Straßenbaumaschine angeordnet ist, kann diese nach vorne oder hinten geneigt werden, ohne dass die Frästiefe beeinflusst wird. Beim Rollen werden das vordere und hintere linke Rad 4, 8 angehoben bzw. abgesenkt, während das vordere und hintere rechte Rad 6, 10 um den selben Betrag abgesenkt bzw. angehoben werden.

Die Hydraulikschaltung weist eine Ventilsteuerung auf, die ein erstes Wegeventil 79 und zweites Wegeventil 80 umfasst.

Wird das erste Wegeventil 79 in die Stellung A gebracht, fördert die Druckmediumquelle 54 Druckmedium, beispielsweise Öl, über die erste Arbeitsleitung 48 und eine erste Verbindungsleitung 81 zu der dritten Koppelleitung 40, während Öl von der ersten Koppelleitung 36 über eine zweite Verbindungsleitung 83 und die zweite Arbeitsleitung 50 in den Druckmediensumpf 54 abfließt. Wird das zweite Wegeventil 80 in die Stellung A gebracht, fördert die Druckmediumquelle 54 Druckmedium, beispielsweise Öl, über die erste Arbeitsleitung 48 und eine dritte Verbindungsleitung 82 zu der vierten Koppelleitung 42, während Öl von der zweiten Koppelleitung 38 über eine vierte Verbindungsleitung 48 und die zweite Arbeitsleitung 50 in den Druckmediensumpf 54 abfließt.

Werden hingegen das erste bzw. zweite Wegeventil 79 in die Stellung B gebracht, fördert die Ölpumpe 54 Öl über die erste Arbeitsleitung 48 und die zweite Verbindungsleitung 83 zu der ersten Koppelleitung 38 bzw. über die erste Arbeitsleitung 48 und die vierte Verbindungsleitung 84 zu der zweiten Koppelleitung 38, während Öl von der dritten Koppelleitung 40 über die erste Verbindungsleitung 81 und die zweite Arbeitsleitung 50 bzw. von der vierten Koppelleitung 42 über die zweite Verbindungsleitung 82 und die zweite Arbeitsleitung 50 und in den Druckmediensumpf 54 abfließt.

Folglich werden in der Stellung A des ersten Wegeventils 79 die erste Arbeitskammer 24 des dritten Zylinders 16 und die erste Arbeitskammer 26 des vierten Zylinders 18 und die zweite Arbeitskammer 28 des ersten Zylinders 12 und die zweite Arbeitskammer 30 des zweiten Zylinders 14 mit Öl beaufschlagt, während Öl aus anderen Arbeitskammern der Zylinder abfließt, so dass die vorderen Räder 4, 6 eingefahren und die hinteren Räder 8, 10 ausgefahren werden. In der Stellung B des ersten Wegeventils 79 werden hingegen die vorderen Räder 4, 6 ausgefahren und die hinteren Räder 8, 10 eingefahren. Somit "nickt" die Maschine.

In der Stellung A des zweiten Wegeventils 80 wird die zweite Arbeitskammer 28 des ersten Zylinders 12 und die zweite Arbeitskammer 32 des dritten Zylinders 16 mit Öl beaufschlagt, während Öl aus der zweiten Arbeitskammer 30 des zweiten Zylinders 14 und der zweiten Arbeitskammer 34 des vierten Zylinders 18 abfließt, so dass die linken Räder 4, 8 eingefahren und die rechten Räder 6, 10 ausgefahren werden. In der Stellung B des zweiten Wegeventils 80 hingegen wird die zweite Arbeitskammer 30 des zweiten Zylinders 14 und die zweite Arbeitskammer 34 des vierten Zylinders 18 mit Öl beaufschlagt, während Öl aus den anderen Arbeitskammern abfließt, so dass die rechten Räder 6, 10 eingefahren und die linken Räder 4, 8 ausgefahren werden. Somit "rollt" die Maschine um ihre Längsachse.

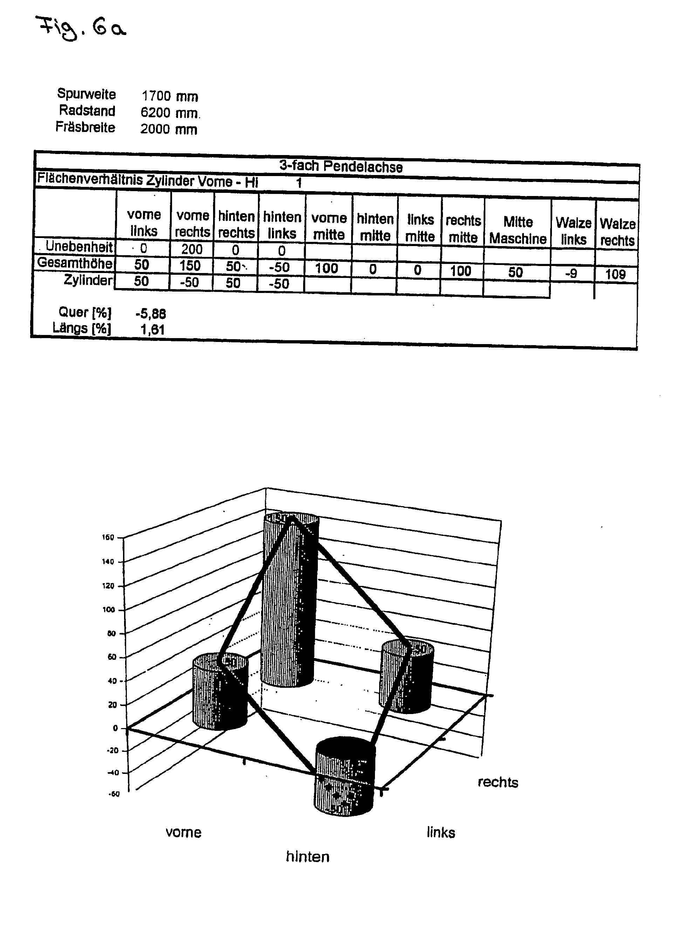

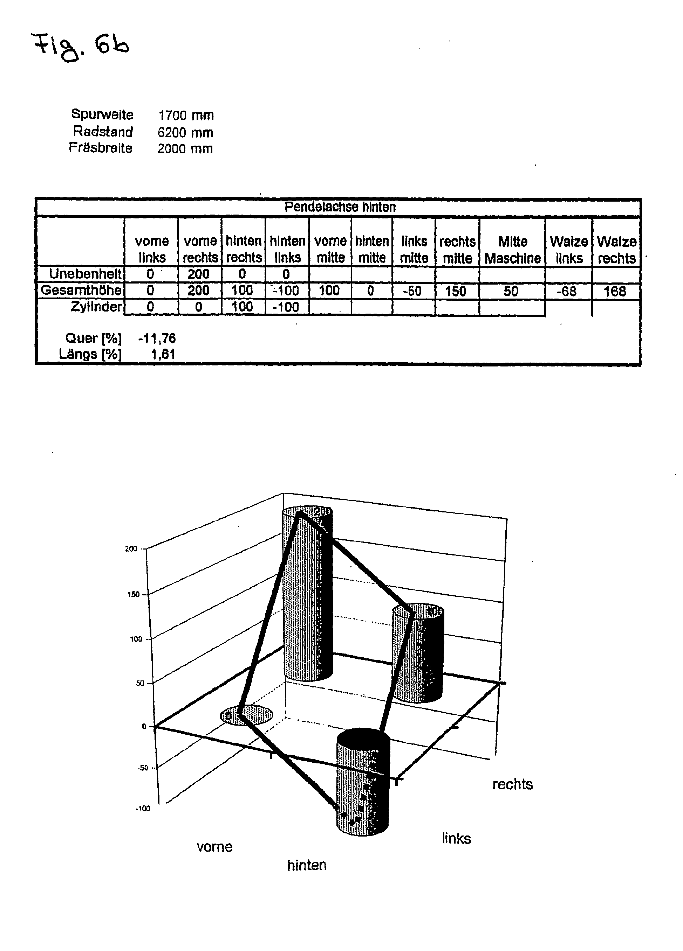

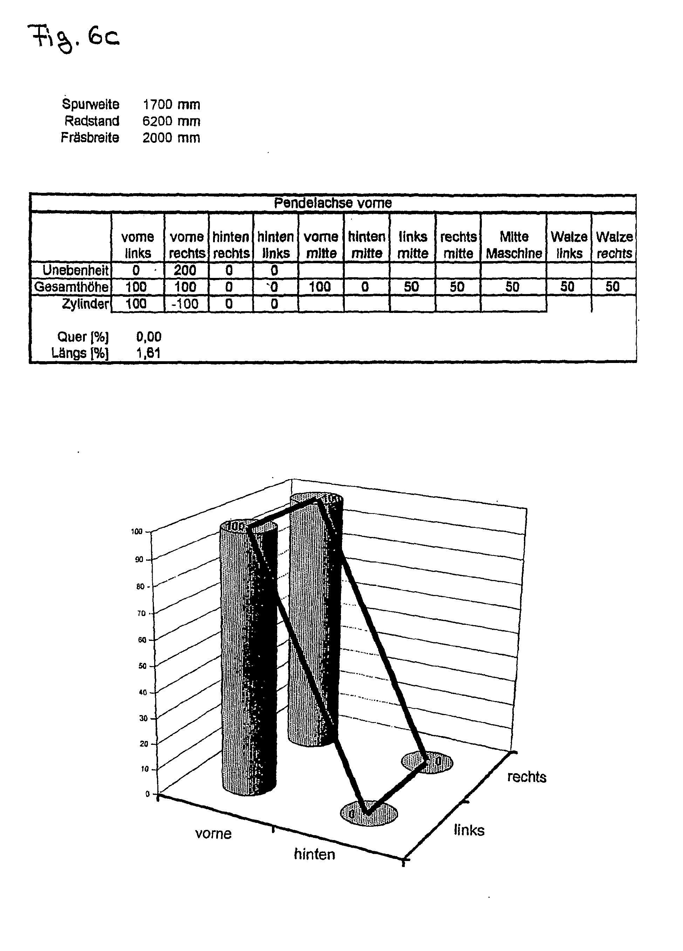

Die Figuren 6a, 6b und 6c zeigen jeweils in Form einer Tabelle und eines zugehörigen Schaubildes das mit einem Computerprogramm simulierte Anheben und Absenken der Kolben der einzelnen Zylinder 12, 14, 16, 18, d.h. der Räder 4, 6, 8, 10, von Straßenfräsmaschinen mit unterschiedlichem Fahrwerk mit einer Spurweite von 1700 mm, einem Radstand von 6200 mm und einer Fräsbreite von 2000 mm beim Überfahren einer Unebenheit vorne links mit einer Höhe von 200 mm.

Der Tabelle und dem Säulendiagramm von Fig. 6a ist die Gesamthöhe, die Höhe der Maschinenmitte sowie die Höhe der linken und rechten Fräswalzenseite sowie der Hub der Kolben der einzelnen Zylinder der erfindungsgemäßen Straßenfräsmaschine beim Überfahren des Hindernisses zu entnehmen, während der Fig. 6b die entsprechenden Werte für eine bekannte Straßenfräsmaschine mit einer Pendelachse hinten und einer Starrachse vorne und der Fig. 6c die entsprechenden Werte für eine bekannte Straßenfräsmaschine mit einer Pendelachse vorne und einer Starrachse hinten zu entnehmen sind.

Die beschriebenen Hydraulikschaltungen können noch zusätzliche Komponenten, beispielsweise Speicherbehälter, Drosseln und dergleichen, umfassen, die aber für die Grundfunktionen der Schaltung nicht zwingend erforderlich sind.

Die Tabellen und Schaubilder zeigen deutlich, dass die Querneigung der erfindungsgemäßen Straßenfräsmaschine (Fig. 6a) beim Überfahren des Hindernisses mit 5,88 % deutlich geringer als die Querneigung der Maschine mit der Pendelachse hinten nach dem Stand der Technik (Fig. 6b) ist, deren Querneigung 11,76 % ist. Zwar ist beim Überfahren eines Hindernisses vorne links die Querneigung der Maschine mit Pendelachse vorne nach dem Stand (Fig. 6c) 0 %, beim Überfahren eines anderen Hindernisses kommt der angesprochene Vorteil aber wieder zum Tragen. Insgesamt ist bei der erfindungsgemäßen Straßenfräsmaschine also die Neigung im Mittel bei verschiedenen Hindernissen gesehen geringer als bei den bekannten Maschinen.

Figur 7 zeigt das Fahrwerk in schematischer Darstellung zur Veranschaulichung der Standsicherheit der Maschine im Vergleich zum Stand der Technik.

Die Maschine verfügt über ein linkes Vorderrad 4 und ein rechtes Vorderrad 6 sowie ein linkes Hinterrad 8 und ein rechtes Hinterrad 10. Die Fahrtrichtung der Maschine ist mit einem Pfeil gekennzeichnet. Darüber hinaus weist die Maschine eine Fräswalze W oder einen Fräs- / Mischrotor W auf, die bzw. der mittig zwischen Vorder- und Hinterrädern angeordnet ist. Der Schwerpunkt der Maschine ist mit "S" bezeichnet.

Bei dem Ausführungsbeispiel gemäß Figur 5 entspricht das "Nicken" einem Kippen oder Schwenken um die Achse L-R und das "Rollen" dem Kippen oder Schwenken um die Achse C-A.

Zunächst wird die Standsicherheit einer konventionellen Maschine beschrieben, die eine Pendelachse vorne und eine Starrachse hinten aufweist. Die Standsicherheit der konventionellen Maschine beschreibt ein Standsicherheitsdreieck, mit den Eckpunkten A', B', C'. Die Maschine steht solange stabil, wie ihr Schwerpunkt innerhalb des Standsicherheitsdreiecks A', B', C' liegt. Liegt der Schwerpunkt auf einer der Linien a', b', c', so befindet sich die Maschine in einem metastabilen Zustand. Liegt der Schwerpunkt hingegen außerhalb des Standsicherheitsdreiecks A', B', C', ist die Maschine instabil und kippt um die Achse a' oder b' oder c' des Standsicherheitsdreiecks, die dem Schwerpunkt S am nächsten liegt.

Die Wirkungsweise der Pendelsachse liegt darin, dass beim Überfahren eines Hindernisses nur durch eines der beiden Vorderräder 4, 6 nicht die jeweilige Ecke der Maschine angehoben wird, sondern das gesamte Vorderteil der Maschine. Wenn das linke oder rechte Vorderrad das Hindernis überfährt, wird das Vorderrad der Maschine um die Hälfte der Gesamthöhe des Hindernisses angehoben, d.h. die Maschine verhält sich so, als ob der Punkt C' um die Hälfte der Höhe des Hindernisses angehoben wird, wobei der Punkt C' dabei um die Achse c' kippt oder schwenkt, die die Basis des Standsicherheitsdreiecks A', B', C' ist. Fährt die Maschine weiter, so kommt das Hindernis unter das linke oder rechte Hinterrad 8, 10, beispielsweise das rechte Hinterrad 10. Da die Hinterachse eine Starrachse ist, wird die hintere rechte Ecke um die gesamte Höhe des Hindernisses angehoben. Die Lage der linken hinteren Seite der Maschine bleibt dabei aber unverändert. Die Maschine kippt oder schwenkt um die Achse b', d.h. die Vorderachse nimmt die dieselbe Querneigung ein, wie die Hinterachse, wobei der Punkt C' in der Höhe unverändert bleibt, so dass die Vorderräder 4, 6 um entsprechend gleiche Beträge, aber in entgegengesetzter Richtung ein- bzw. ausfahren, um diese Störung auszupendeln. Da die Achsen a' bzw. b' des Standsicherheitsdreiecks A', B', C' relativ steil zur Achse L-R der Walze W verlaufen, wird dadurch das Fräsbild negativ beeinflusst.

Ein Pendeln um die Längsachse C-A der Maschine hat den größten negativen Einfluss auf die Höhe der linken und rechten Schnittkante L, R der Fräswalze W, während ein Pendeln um die Walzenachse L-R überhaupt keinen Einfluss auf die Frästiefe hat.

Im Vergleich zum Stand der Technik wird die Standsicherheit einer erfindungsgemäßen Straßenbaumaschine nicht durch ein Standsicherheitsdreieck, sondern durch eine Standsicherheitsraute A, B, C, D beschrieben.

Wenn beispielsweise das rechte Vorderrad 6 auf ein Hindernis zufährt, so kippt oder schwenkt die Maschine um die Achse a, wobei Analoges für die anderen Räder gilt. Entsprechendes gilt auch für den Fall, dass die einzelnen Räder bei dem unter Bezugnahme auf Figur 3 beschriebenen Ausführungsbeispiel durch Betätigen der Wegeventile angehoben bzw. abgesenkt werden.

Die Figur 7 zeigt die verbesserte Standsicherheit der erfindungsgemäßen Straßenbaumaschine im Vergleich zu einer konventionellen Maschine deutlich durch die Standsicherheitsraute im Vergleich zum Standsicherheitsdreieck. Der Abstand des Schwerpunktes S zu allen Seiten der Standsicherheitsraute A, B, C, D ist deutlich größer als der Abstand des Schwerpunktes zu irgendeiner Seite des Standsicherheitsdreiecks A', B', C'. Beispielsweise ist der Abstand des Schwerpunktes S zu einem der Punkte D oder B der Raute A, B, C, D genau doppelt so groß wie der Abstand des Schwerpunktes S zum Schnittpunkt der Achse L-R mit einer der Seiten a' oder b' des Dreiecks A', B', C'.

## Patentansprüche

1. Straßenbaumaschine, deren linkes Vorderrad (4) oder Kettenlaufwerk, rechtes Vorderrad (6) oder Kettenlaufwerk, linkes Hinterrad (8) oder Kettenlaufwerk und rechtes Hinterrad (10) oder Kettenlaufwerk jeweils mittels eines Stellgliedes mit dem Fahrwerk der Straßenbaumaschine verbunden und bezüglich des Rahmens der Straßenbaumaschine höhenverstellbar ist, wobei die einzelnen Stellglieder starr mit dem Fahrwerk verbunden und derart miteinander zwangsgekoppelt sind, dass das linke Vorderrad (4) oder Kettenlaufwerk und das rechte Hinterrad (10) oder Kettenlaufwerk in die selbe Richtung und zu dem rechten Vorderrad (6) oder Kettenlaufwerk und dem linken Hinterrad (8) oder Kettenlaufwerk in entgegen gesetzter Richtung höhenverstellbar sind, wobei die Straßenbaumaschine eine Fräswalze oder einen Fräs-/Mischrotor (W) aufweist, der zwischen den vorderen und hinteren Rädern oder Kettenlaufwerken (4, 6, 8, 10) angeordnet ist, und wobei die Stellglieder (12, 14, 16, 18) als doppelt wirkende Arbeitszylinder mit einer ersten und einer zweiten Arbeitskammer (20, 22, 24, 26; 28, 30, 32, 34) ausgebildet sind, die mit einem Druckmedium befüllt sind, wobei die Arbeitszylinder (12, 14, 16, 18) über Koppelleitungen (36, 38, 40, 42) miteinander verbunden sind.

2. Straßenbaumaschine nach Anspruch 1, **dadurch gekennzeichnet, dass** die Arbeitskammern (20, 22, 24, 26; 28, 30, 32, 34) der Arbeitszylinder (12, 14, 16, 18) über die Koppelleitungen (36, 38, 40, 42) derart zwangsgekoppelt sind, dass das Befüllen der ersten Arbeitskammer (20, 22, 24, 26) oder das Entleeren der zweiten Arbeitskammer (28, 30, 32, 34) ein Absenken des Rades (4, 6, 8, 10) bewirkt, während das Befüllen der zweiten Arbeitskammer (28, 30, 32, 34) oder das Entleeren der ersten Arbeitskammer (20, 22, 24, 26) ein Anheben des Rades (4, 6, 8, 10) bewirkt.

3. Straßenbaumaschine nach Anspruch 2, **dadurch gekennzeichnet, dass** ein erster Arbeitszylinder (12) zur Höhenverstellung des linken Vorderrades (4), ein zweiter Arbeitszylinder (14) zur Höhenverstellung des rechten Vorderrades (6), ein dritter Arbeitszylinder (16) zur Höhenverstellung des linken Hinterrades (8) und ein vierter Arbeitszylinder (18) zur Höhenverstellung des rechten Hinterrades (10) vorgesehen ist.

4. Straßenbaumaschine nach einem der Ansprüche 1 bis 3, **dadurch gekennzeichnet, dass** die Stellglieder gleich ausgebildet sind, so dass die Höhenverstellung bei allen Rädern (4, 6, 8, 10) im wesentlichen um gleiche Beträge erfolgt.

5. Straßenbaumaschine nach Anspruch 3 oder 4, **dadurch gekennzeichnet, dass** die erste Arbeitskammer (20) des ersten Arbeitszylinders (12) mit der ersten Arbeitskammer (22) des zweiten Arbeitszylinders (14), die zweite Arbeitskammer (30) des zweiten Arbeitszylinders (14) mit der zweiten Arbeitskammer (34) des vierten Arbeitszylinder (18), die erste Arbeitskammer (26) des vierten Arbeitszylinders (18) mit der ersten Arbeitskammer (24) des dritten Arbeitszylinders (16) und die zweite Arbeitskammer (32) des dritten Arbeitszylinders (16) mit der zweiten Arbeitskammer (28) des ersten Arbeitszylinders (12) über eine Koppelleitung (36, 38, 40, 42) verbunden ist.

6. Straßenbaumaschine nach Anspruch 3 oder 4, **dadurch gekennzeichnet, dass** die zweite Arbeitskammer des ersten Arbeitszylinders mit der zweiten Arbeitskammer des zweiten Arbeitszylinders, die erste Arbeitskammer des zweiten Arbeitszylinders mit der ersten Arbeitskammer des vierten Arbeitszylinder, die zweite Arbeitskammer des vierten Arbeitszylinders mit der zweiten Arbeitskammer des dritten Arbeitszylinders und die erste Arbeitskammer des dritten Arbeitszylinders mit der ersten Arbeitskammer des ersten Arbeitszylinders über eine Koppelleitung verbunden ist.

7. Straßenbaumaschine nach einem der Ansprüche 5 oder 6, **dadurch gekennzeichnet, dass** der erste und der zweite Arbeitszylinder (12, 14) über eine erste Koppelleitung (36), der zweite und der vierte Arbeitszylinder (14, 18) über eine zweite Koppelleitung (38), der vierte und der dritte Arbeitszylinder (18, 16) über eine dritte Koppelleitung (40) und der dritte und der erste Arbeitszylinder (16, 12) über eine vierte Koppelleitung (42) miteinander verbunden sind.

8. Straßenbaumaschine nach einem der Ansprüche 1 bis 7, **dadurch gekennzeichnet, dass** die Arbeitszylinder (12, 14, 16, 18) zusammen mit den Koppelleitungen (36, 38, 40, 42) ein geschlossenes System ausbilden.

9. Straßenbaumaschine nach einem der Ansprüche 1 bis 8, **dadurch gekennzeichnet, dass** die Koppelleitungen (36, 38, 40, 42) mit Hilfe einer Ventilsteuerung über Arbeitsleitungen (48, 50) mit einer Druckmediumquelle und/oder einem Druckmediumsumpf verbindbar sind.

10. Straßenbaumaschine, deren linkes Vorderrad (4) oder Kettenlaufwerk, rechtes Vorderrad (6) oder Kettenlaufwerk, linkes Hinterrad (8) oder Kettenlaufwerk und rechtes Hinterrad (10) oder Kettenlaufwerk jeweils mittels eines Stellgliedes mit dem Fahrwerk der Straßenbaumaschine verbunden und bezüglich des Rahmens der Straßenbaumaschine höhenverstellbar ist,
wobei
die Straßenbaumaschine eine Fräswalze oder einen Fräs-/Mischrotor (W) aufweist, der zwischen den vorderen und hinteren Rädern oder Kettenlaufwerken (4, 6, 8, 10) angeordnet ist,
die einzelnen Stellglieder starr mit dem Fahrwerk verbunden sind und
die einzelnen Stellglieder in einem Betriebsmodus derart miteinander zwangsgekoppelt sind, dass das linke Vorderrad (4) oder Kettenlaufwerk und das rechte Hinterrad (10) oder Kettenlaufwerk in die selbe Richtung und zu dem rechten Vorderrad (6) oder Kettenlaufwerk und dem linken Hinterrad (8) oder Kettenlaufwerk in entgegen gesetzter Richtung höhenverstellbar sind, und wobei die Stellglieder (12, 14, 16, 18) als doppelt wirkende Arbeitszylinder mit einer ersten und einer zweiten Arbeitskammer (20, 22, 24, 26; 28, 30, 32, 34) ausgebildet sind, die mit einem Druckmedium befüllt sind, wobei die Arbeitszylinder (12, 14, 16, 18) über Koppelleitungen (36, 38, 40, 42) unter Ausbildung eines geschlossenen Systems miteinander verbunden sind, und
wobei eine Ventilsteuerung (56, 58, 60) vorgesehen ist, mit der in einem anderen Betriebsmodus unter Aufhebung der Zwangskopplung die Koppelleitungen (36, 38, 40, 42) über Arbeitsleitungen (48, 50) mit einer Druckmediumquelle (54) und/oder einem Druckmediumsumpf (52) verbunden sind, so dass unabhängig von der Zwangskopplung Einstellungen an den Vorder- bzw. Hinterrädern vorgenommen werden können.

11. Straßenbaumaschine nach Anspruch 10, **dadurch gekennzeichnet, dass** die Arbeitskammern (20, 22, 24, 26; 28, 30, 32, 34) der Arbeitszylinder (12, 14, 16, 18) über die Koppelleitungen (36, 38, 40, 42) derart zwangsgekoppelt sind, dass das Befüllen der ersten Arbeitskammer (20, 22, 24, 26) oder das Entleeren der zweiten Arbeitskammer (28, 30, 32, 34) ein Absenken des Rades (4, 6, 8, 10) bewirkt, während das Befüllen der zweiten Arbeitskammer (28, 30, 32, 34) oder das Entleeren der ersten Arbeitskammer (20, 22, 24, 26) ein Anheben des Rades (4, 6, 8, 10) bewirkt.

12. Straßenbaumaschine nach Anspruch 11, **dadurch gekennzeichnet, dass** ein erster Arbeitszylinder (12) zur Höhenverstellung des linken Vorderrades (4), ein zweiter Arbeitszylinder (14) zur Höhenverstellung des rechten Vorderrades (6), ein dritter Arbeitszylinder (16) zur Höhenverstellung des linken Hinterrades (8) und ein vierter Arbeitszylinder (18) zur Höhenverstellung des rechten Hinterrades (10) vorgesehen ist.

13. Straßenbaumaschine nach einem der Ansprüche 10 bis 12, **dadurch gekennzeichnet, dass** die Stellglieder gleich ausgebildet sind, so dass die Höhenverstellung bei allen Rädern (4, 6, 8, 10) im Wesentlichen um gleiche Beträge erfolgt.

14. Straßenbaumaschine nach Anspruch 12 oder 13, **dadurch gekennzeichnet, dass** die erste Arbeitskammer (20) des ersten Arbeitszylinders (12) mit der ersten Arbeitskammer (22) des zweiten Arbeitszylinders (14), die zweite Arbeitskammer (30) des zweiten Arbeitszylinders (14) mit der zweiten Arbeitskammer (34) des vierten Arbeitszylinder (18), die erste Arbeitskammer (26) des vierten Arbeitszylinders (18) mit der ersten Arbeitskammer (24) des dritten Arbeitszylinders (16) und die zweite Arbeitskammer (32) des dritten Arbeitszylinders (16) mit der zweiten Arbeitskammer (28) des ersten Arbeitszylinders (12) über eine Koppelleitung (36, 38, 40, 42) verbunden ist.

15. Straßenbaumaschine nach Anspruch 12 oder 13, **dadurch gekennzeichnet, dass** die zweite Arbeitskammer des ersten Arbeitszylinders mit der zweiten Arbeitskammer des zweiten Arbeitszylinders, die erste Arbeitskammer des zweiten Arbeitszylinders mit der ersten Arbeitskammer des vierten Arbeitszylinder, die zweite Arbeitskammer des vierten Arbeitszylinders mit der zweiten Arbeitskammer des dritten Arbeitszylinders und die erste Arbeitskammer des dritten Arbeitszylinders mit der ersten Arbeitskammer des ersten Arbeitszylinders über eine Koppelleitung verbunden ist.

16. Straßenbaumaschine nach einem der Ansprüche 14 oder 15, **dadurch gekennzeichnet, dass** der erste und der zweite Arbeitszylinder (12, 14) über eine erste Koppelleitung (36), der zweite und der vierte Arbeitszylinder (14, 18) über eine zweite Koppelleitung (38), der vierte und der dritte Arbeitszylinder (18, 16) über eine dritte Koppelleitung (40) und der dritte und der erste Arbeitszylinder (16, 12) über eine vierte Koppelleitung (42) miteinander verbunden sind.

17. Straßenbaumaschine nach einem der Ansprüche 10 bis 16, **dadurch gekennzeichnet, dass** die Ventilsteuerung derart ausgebildet ist, dass alle Räder (4, 6, 8, 10) in einem ersten Betriebsmodus angehoben und in einem zweiten Betriebsmodus abgesenkt werden, wobei dies jeweils um den gleichen Betrag erfolgt.

18. Straßenbaumaschine, nach einem der Ansprüche 10 bis 16, **dadurch gekennzeichnet, dass** die Ventilsteuerung derart ausgebildet ist, dass ein einzelnes Rad (4, 6, 8, 10) in einem ersten Betriebsmodus angehoben und in einem zweiten Betriebsmodus abgesenkt wird.

19. Straßenbaumaschine nach Anspruch 18, **dadurch gekennzeichnet, dass** lediglich eines der Vorderräder (4, 6) in einem ersten Betriebsmodus angehoben und in einem zweiten Betriebsmodus abgesenkt wird.

20. Straßenbaumaschine nach Anspruch 18, **dadurch gekennzeichnet, dass** die Ventilsteuerung derart ausgebildet ist, dass das linke und rechte Vorderrad (4, 6) oder das linke und rechte Hinterrad (8, 10) oder das linke Hinter- und Vorderrad (8, 4) oder das rechte Hinter- und Vorderrad (10, 6) in der selben Richtung und um den gleichen Betrag höhenverstellt werden.

21. Straßenbaumaschine nach einem der Ansprüche 10 bis 20, **dadurch gekennzeichnet, dass** die Ventilsteuerung in einem die Zwangskopplung wiederherstellenden Betriebsmodus betreibbar ist.

## Claims

1. A road construction machine with a left front wheel (4) or track, right front wheel (6) or track, left rear wheel (8) or track and right rear wheel (10) or track, each of which is connected to the chassis of the road construction machine by way of an actuator and which is height-adjustable relative to the frame of the road construction machine, wherein the individual actuators are rigidly connected to the chassis and are forcibly coupled to one another in such a way that the left front wheel (4) or track and the right rear wheel (10) or track can be height-adjusted in the same direction and in the opposite direction as that of the right front wheel (6) or track and the left rear wheel (8) or track, wherein the road construction machine comprises a cutting rotor or a cutting/mixing rotor (W) disposed between the front and rear wheels or tracks (4,6,8,10), and wherein the actuators (12,14, 16, 18) are designed as dual-acting working cylinders with a first and a second working chamber (20, 22, 24, 26; 28, 30, 32, 34), the cylinders being filled with a pressure medium, wherein the working cylinders (12, 14, 16, 18) are connected together by way of coupling lines (36, 38, 40, 42).

2. The road construction machine according to Claim 1, **characterized in that** the working chambers (20, 22, 24, 26; 28, 30, 32, 34) of the working cylinders (12, 14, 16, 18) are forcibly coupled by way of the coupling lines (36, 38, 40,42) such that filling the first working chamber (20, 22, 24,26) or emptying the second working chamber (28, 30, 32, 34) causes a wheel (4, 6, 8,10) to lower, whereas filling the second working chamber (28, 30, 32, 34) or emptying the first working chamber (20, 22, 24, 26) causes the wheel (4,6, 8, 10) to rise.

3. The road construction machine according to Claim 2, **characterized in that** a first working cylinder (12) for adjusting the height of the left front wheel (4), a second working cylinder (14) for adjusting the height of the right front wheel (6), a third working cylinder (16) for adjusting the height of the left rear wheel (8)
and a fourth working cylinder (18) for adjusting the height of the right rear wheel (10) is provided.

4. The road construction machine according to one of Claims 1 to 3, **characterized in that** the actuators are designed the same so that the height adjustment is by substantially the same amounts for all wheels (4, 6, 8, 10).

5. The road construction machine according to Claim 3 or 4, **characterized in that** the first working chamber (20) of the first working cylinder (12) is connected to the first working chamber (22) of the second working cylinder (14), the second working chamber (30) of the second working cylinder (14) is connected to the second working chamber (34) of the fourth working cylinder (18), the first working chamber (26) of the fourth working cylinder (18) is connected to the first working chamber (24) of the third working cylinder (16) and the second working chamber (32) of the third working cylinder (16) is connected to the second working chamber (28) of the first working cylinder (12) by way of a coupling line (36, 38,40, 42).

6. The road construction machine according to Claim 3 or 4, **characterized in that** the second working chamber of the first working cylinder is connected to the second working chamber of the second working cylinder, the first working chamber of the second working cylinder is connected to the first working chamber of the fourth working cylinder, the second working chamber of the fourth working cylinder is connected to the second working chamber of the third working cylinder and the first working chamber of the third working cylinder is connected to the first working chamber of the first working cylinder by way of a coupling line.

7. A road construction machine according to one of Claims 5 or 6, **characterized in that** the first and the second working cylinders (12, 14) are connected together by way of a first coupling line (36), the second and the fourth working cylinders (14, 18) are connected together by way of a second coupling line (38), the fourth and the third working cylinders (18, 16) are connected together by way of a third coupling line (40) and the third and the first working cylinders (16, 12) are connected together by way of a fourth coupling line (42).

8. The road construction machine according to one of Claims 1 to 7, **characterized in that** the working cylinders (12, 14, 16, 18) form a closed system together with the coupling lines (36, 38, 40, 42).

9. The road construction machine according to one of Claims 1 to 8, **characterized in that** the coupling lines (36, 38, 40, 42) can be connected to a pressure medium source and/or to a pressure medium sump with the aid of valve controls by way working lines (48, 50).

10. A road construction machine, with a left front wheel (4) or track, right front wheel (6) or track, left rear wheel (8) or track and right rear wheel (10) or track, each of which is connected to the chassis of the road construction machine by way of an actuator and which is height-adjustable relative to the frame of the road construction machine,
wherein
the road construction machine comprises a cutting rotor or a cutting/mixing rotor (W) which is disposed between the front and the rear wheels or tracks (4, 6. 8. 10)
the individual actuators are rigidly connected to the chassis and
the individual actuators are forcibly coupled together in an operating mode such that the left front wheel (4) or track and the right rear wheel (10) or track can be height-adjusted in the same direction and in the opposite direction to the right front wheel (6) or track and the left rear wheel (8) or track, and wherein the actuators (12, 14, 16, 18) are designed as dual-acting working cylinders with a first and a second working chamber (20, 22, 24, 26; 28, 30, 32, 34), the cylinders being filled with a pressure medium, wherein the working cylinders (12, 14, 16, 18) are connected together by way of coupling lines (36, 38, 40, 42), thereby forming a closed system, and
wherein valve controls (56, 58, 60) are provided for connecting the coupling lines (36, 38. 40, 42) to a pressure medium source (54) and/or a pressure medium sump (52) by way of working lines (48, 50) in another operating mode while suspending the forced coupling so that adjustments can be made to the front and rear wheels independent of the forced coupling.

11. The road construction machine according to Claim 10, **characterized in that** the working chambers (20, 22, 24, 26; 28, 30, 32, 34) of the working cylinders (12, 14, 16, 18) are forcibly coupled by way of the coupling lines (36, 38, 40, 42) such that filling the first working chamber (20, 22, 24, 26) or emptying the second working chamber (28, 30, 32, 34) causes a wheel (4, 6, 8, 10) to lower, whereas filling the second working chamber (28, 30, 32, 34) or emptying the first working chamber (20, 22, 24, 26) causes the wheel (4, 6, 8, 10) to rise.

12. The road construction machine according to Claim 11, **characterized in that** a first working cylinder (12) for adjusting the height of the left front wheel (4), a second working cylinder (14) for adjusting the height of the right front wheel (6), a third working cylinder (16) for adjusting the height of the left rear wheel (8) and a fourth working cylinder (18) for adjusting the height of the right rear wheel (10) are provided

13. The road construction machine according to one of Claims 10 to 12, **characterized in that** the actuators are designed the same so that the height adjustment is by substantially the same amounts for all wheels (4, 6, 8, 10).

14. The road construction machine according to Claim 12 or 13 **characterized in that** the first working chamber (20) of the first working cylinder (12) is connected to the first working chamber (22) of the second working cylinder (14), the second working chamber (30) of the second working cylinder (14) is connected to the second working chamber (34) of the fourth working cylinder (18), the first working chamber (26) of the fourth working cylinder (18) is connected to the first working chamber (24) of the third working cylinder (16) and the second working chamber (32) of the third working cylinder (16) is connected with the second working chamber (28) of the first working cylinder (12) by way of a coupling line (36, 38, 40, 42).

15. The road construction machine according to Claim 12 or 13, **characterized in that** the second working chamber of the first working cylinder is connected to the second working chamber of the second working cylinder, the first working chamber of the second working cylinder is connected to the first working chamber of the fourth working cylinder, the second working chamber of the fourth working cylinder is connected to the second working chamber of the third working cylinder and the first working chamber of the third working cylinder is connected to the first working chamber of the first working cylinder by way of a coupling line.

16. A road construction machine according to one of Claims 14 or 15, **characterized in that** the first and the second working cylinders (12, 14) are connected together by way of a first coupling line (36), the second and the fourth working cylinders (14, 18) are connected together by way of a second coupling line (38), the fourth and the third working cylinders (18, 16) are connected together by way of a third coupling line (40) and the third and the first working cylinders (16, 12) are connected together by way of a fourth coupling line (42).

17. The road construction machine according to one of Claims 10 to 16, **characterized in that** the valve controls are designed such that all wheels (4, 6, 8, 10) are raised in a first operating mode and are lowered in a second operating mode, wherein this is done by the same amount.

18. The road construction machine according to one of Claims 10 to 16, **characterized in that** the valve controls are designed such that an individual wheel (4, 6, 8, 10) is raised in a first operating mode and is lowered in a second operating mode.

19. The road construction machine according to Claim 18, **characterized in that** only one of the front wheels (4,6) is raised in a first operating mode and lowered in a second operating mode.

20. The road construction machine according to Claim 18, **characterized in that** the valve controls are designed such that the left and right front wheels (4, 6) or the left and right rear wheels (8, 10) or the left rear and left front wheels (4) or the right rear and right front wheels (10, 6) are height-adjusted in the same direction and by the same amount.

21. The road construction machine according to one of Claims 10 to 20, **characterized in that** the valve controls can be operated in an operating mode that restores forced coupling.

## Revendications

1. Machine de construction routière, dont la roue avant gauche (4) ou le mécanisme de roulement à chenilles, la roue avant droite (6) ou le mécanisme de roulement à chenilles, la roue arrière gauche (8) ou le mécanisme de roulement à chenilles et la roue arrière droite (10) ou le mécanisme de roulement à chenilles sont respectivement reliés au moyen d'un organe de réglage au châssis de la machine de construction routière et sont réglables en hauteur par rapport au cadre de l'engin routier, sachant que les divers organes de réglage sont reliés de manière fixe au châssis et sont couplés à force les uns aux autres de telle manière que la roue avant gauche (4) ou le mécanisme de roulement à chenilles et la roue arrière droite (10) ou le mécanisme de roulement à chenilles sont réglables en hauteur dans la même direction et dans une direction opposée par rapport à la roue avant droite (6) ou le mécanisme de roulement à chenilles et par rapport à la roue arrière gauche (8) ou le mécanisme de roulement à chenilles, sachant que la machine de construction routière présente une fraiseuse ou un rotor de fraisage/rotor mélangeur (W), qui est disposé entre les roues avant et les roues arrières ou les mécanismes de roulement à chenilles (4, 6, 8, 10), et sachant que les organes de réglage (12, 14, 16, 18) sont réalisés sous la forme de cylindres de travail à double action comprenant une première chambre de travail et une deuxième chambre de travail (20, 22, 24, 26 ; 28, 30, 32, 34), lesquelles sont remplies d'un agent sous pression, sachant que les cylindres de travail (12, 14, 16, 18) sont reliés les uns aux autres par l'intermédiaire de lignes de couplage (36, 38, 40, 42).

2. Machine de construction routière selon la revendication 1, **caractérisé en ce que** les chambres de travail (20, 22, 24, 26 ; 28, 30, 32, 34) des cylindres de travail (12, 14, 16, 18) sont couplées à force par l'intermédiaire de lignes de couplage (36, 38, 40, 42) de telle manière que le remplissage de la première chambre de travail (20, 22, 24, 26) ou la vidange de la deuxième chambre de travail (28, 30, 32, 34) entraîne un abaissement de la roue (4, 6, 8, 10), tandis que le remplissage de la deuxième chambre de travail (28, 30, 32, 34) ou la vidange de la première chambre de travail (20, 22, 24, 26) en entraîne un soulèvement de la roue (4, 6, 8, 10).

3. Machine de construction routière selon la revendication 2, **caractérisé en ce qu'**un premier cylindre de travail (12) servant au réglage en hauteur de la roue avant gauche (4), un deuxième cylindre de travail (14) servant au réglage en hauteur de la roue avant droite (6), un troisième cylindre de travail (16) servant au réglage en hauteur de la roue arrière gauche (8) et un quatrième cylindre de travail (18) servant au réglage de hauteur de la roue arrière droite (10) sont prévus.

4. Machine de construction routière selon l'une quelconque des revendications 1 à 3, **caractérisé en ce que** les organes de réglage sont réalisés de manière identique de sorte que le réglage en hauteur est effectué pour toutes les roues (4, 6, 8, 10) essentiellement avec des valeurs identiques.

5. Machine de construction routière selon la revendication 3 ou 4, **caractérisé en ce que** respectivement par l'intermédiaire d'une ligne de couplage (36, 38, 40, 42), la première chambre de travail (20) du premier cylindre de travail (12) est reliée à la première chambre de travail (22) du deuxième cylindre de travail (14), la deuxième chambre de travail (30) du deuxième cylindre de travail (14) est reliée à la deuxième chambre de travail (34) du quatrième cylindre de travail (18), la première chambre de travail (26) du quatrième cylindre de travail (18) est reliée à la première chambre de travail (24) du troisième cylindre de travail (16) et la deuxième chambre de travail (32) du troisième cylindre de travail (16) est reliée à la deuxième chambre de travail (28) du premier cylindre de travail (12).

6. Machine de construction routière selon la revendication 3 ou 4, **caractérisé en ce que** respectivement par l'intermédiaire d'une ligne de couplage, la deuxième chambre de travail du premier cylindre de travail est reliée à la deuxième chambre de travail du deuxième cylindre de travail, la première chambre de travail du deuxième cylindre de travail est reliée à la première chambre de travail du quatrième cylindre de travail, la deuxième chambre de travail du quatrième cylindre de travail est reliée à la deuxième chambre de travail du troisième cylindre de travail et la première chambre de travail du troisième cylindre de travail est reliée à la première chambre de travail du premier cylindre de travail.

7. Machine de construction routière selon l'une quelconque des revendications 5 ou 6, **caractérisé en ce que** le premier et le deuxième cylindre de travail (12, 14) sont reliés l'un à l'autre par l'intermédiaire d'une première ligne de couplage (36), **en ce que** le deuxième et le quatrième cylindre de travail (14, 18) sont reliés l'un à l'autre par l'intermédiaire d'une deuxième ligne de couplage (38), **en ce que** le quatrième et le troisième cylindre de travail (18, 16) sont reliés l'une à l'autre par l'intermédiaire d'une troisième ligne de couplage (40), et **en ce que** le troisième et le premier cylindre de travail (16, 12) sont reliés l'un à l'autre par l'intermédiaire d'une quatrième ligne de couplage (42).

8. Machine de construction routière selon l'une quelconque des revendications 1 à 7, **caractérisé en ce que** les cylindres de travail (12, 14, 16, 18) forment conjointement avec les lignes de couplage (36, 38 40, 42) un système fermé.

9. Machine de construction routière selon l'une quelconque des revendications 1 à 8, **caractérisé en ce que** les lignes de couplage (36, 38, 40, 42) peuvent être reliées à l'aide d'une commande de soupape par l'intermédiaire de lignes de travail (48, 50) à une source d'agent sous pression et/ou à un réservoir d'agent sous pression.

10. Machine de construction routière, dont la roue avant gauche (4) ou le mécanisme de roulement à chenilles, la roue avant droite (6) ou le mécanisme de roulement à chenilles, la roue arrière gauche (8) ou le mécanisme de roulement à chenilles et la roue arrière droite (10) ou le mécanisme de roulement à chenilles sont reliés respectivement au moyen d'un organe de réglage au châssis de la machine de construction routière et sont réglables en hauteur par rapport au cadre de la machine de construction routière,
sachant
que l'machine de construction routière présente une fraiseuse ou un rotor de fraisage/rotor mélangeur (W), qui est disposé entre les roues avant et arrière ou les mécanismes de roulement à chenilles (4, 6, 8, 10),
que les divers organes de réglage sont reliés de manière fixe au châssis, et
que les divers organes de réglage sont couplés à force les uns aux autres dans un mode de fonctionnement de telle manière que la roue avant gauche (4) ou le mécanisme de roulement à chenilles et la roue arrière droite (10) ou le mécanisme de roulement à chenilles sont réglables en hauteur dans la même direction et dans la direction opposée par rapport à la roue avant droite (6) ou le mécanisme de roulement à chenilles et la roue arrière gauche (8) ou le mécanisme de roulement à chenilles, et sachant que les organes de réglage (12, 14, 16, 18) sont réalisés sous la forme de cylindres de travail à double action comprenant une première et une deuxième chambre de travail (20, 22, 24, 26 ; 28, 30, 32, 34), lesquelles sont remplies d'un milieu sous pression, sachant que les cylindres de travail (12, 14, 16, 18) sont reliés entre eux par l'intermédiaire de lignes de couplage (36, 38, 40, 42) en formant un système fermé, et
sachant qu'une commande de soupape (56, 58, 60) est prévue, à l'aide de laquelle, dans un autre mode de fonctionnement, en supprimant le couplage forcé, les lignes de couplage (36, 38, 40, 42) sont reliées par l'intermédiaire de lignes de travail (48, 50) à une source de milieu sous pression (54) et/ou à un réservoir de milieu sous pression (52) de sorte que des réglages peuvent être entrepris sur les roues avant ou arrière indépendamment du couplage forcé.

11. Machine de construction routière selon la revendication 10, **caractérisé en ce que** les chambres de travail (20, 22, 24, 26 ; 28, 30, 32, 34) des cylindres de travail (12, 14, 16, 18) sont couplées à force par l'intermédiaire de lignes de couplage (36, 38, 40, 42) de telle manière que le remplissage de la première chambre de travail (20, 22, 24, 26) ou la vidange de la deuxième chambre de travail (28, 30, 32, 34) entraîne un abaissement de la roue (4, 6, 8, 10), tandis que le remplissage de la deuxième chambre de travail (28, 30, 32, 34) ou la vidange de la première chambre de travail (20, 22, 24, 26) entraîne un soulèvement de la roue (4, 6, 8, 10).

12. Machine de construction routière selon la revendication 11, **caractérisé en ce qu'**un premier cylindre de travail (12) servant au réglage en hauteur de la roue avant gauche (4), un deuxième cylindre de travail (14) servant au réglage en hauteur de la roue avant droite (6), un troisième cylindre de travail (16) servant au réglage en hauteur de la roue arrière gauche (8) et un quatrième cylindre de travail (18) servant au réglage en hauteur de la roue arrière droite (10) sont prévus.

13. Machine de construction routière selon l'une quelconque des revendications 10 à 12, **caractérisé en ce que** les organes de réglage sont réalisés de manière identique de sorte que le réglage en hauteur est effectué pour toutes les roues (4, 6, 8, 10) essentiellement avec des valeurs identiques.

14. Machine de construction routière selon la revendication 12 ou 13, **caractérisé en ce que** respectivement par l'intermédiaire d'une ligne de couplage (36, 38, 40, 42), la première chambre de travail (20) du premier cylindre de travail (12) est reliée à la première chambre de travail (22) du deuxième cylindre de travail (14), **en ce que** la deuxième chambre de travail (30) du deuxième cylindre de travail (14) est reliée à la deuxième chambre de travail (34) du quatrième cylindre de travail (18), **en ce que** la première chambre de travail (26) du quatrième cylindre de travail (18) est reliée à la première chambre de travail (24) du troisième cylindre de travail (16), et **en ce que** la deuxième chambre de travail (32) du troisième cylindre de travail (16) est reliée à la deuxième chambre de travail (28) du premier cylindre de travail (12).

15. Machine de construction routière selon la revendication 12 ou 13, **caractérisé en ce que** respectivement par l'intermédiaire d'une ligne de couplage, la deuxième chambre de travail du premier cylindre de travail est reliée à la deuxième chambre de travail du deuxième cylindre de travail, **en ce que** la première chambre de travail du deuxième cylindre de travail est reliée à la première chambre de travail du quatrième cylindre de travail, **en ce que** la deuxième chambre de travail du quatrième cylindre de travail est reliée à la deuxième chambre de travail du troisième cylindre de travail, et **en ce que** la première chambre de travail du troisième cylindre de travail est reliée à la première chambre de travail du premier cylindre de travail.

16. Machine de construction routière selon l'une quelconque des revendications 14 ou 15, **caractérisé en ce que** le premier et le deuxième cylindre de travail (12, 14) sont reliés l'un à l'autre par l'intermédiaire d'une première ligne de couplage (36), **en ce que** le deuxième et le quatrième cylindre de travail (14, 18) sont reliés l'un à l'autre par l'intermédiaire d'une deuxième ligne de couplage (38), **en ce que** le quatrième et le troisième cylindre de travail (18, 16) sont reliés l'un à l'autre par l'intermédiaire d'une troisième ligne de couplage (40), et **en ce que** le troisième et le premier cylindre de travail (16, 12) sont reliés l'un à l'autre par l'intermédiaire d'une quatrième ligne de couplage (42).

17. Machine de construction routière selon l'une quelconque des revendications 10 à 16, **caractérisé en ce que** la commande de soupape est réalisée de telle manière que toutes les roues (4, 6, 8, 10) sont relevées dans un premier mode de fonctionnement et sont abaissées dans un deuxième mode de fonctionnement, sachant que cela s'effectue respectivement avec une valeur identique.

18. Machine de construction routière selon l'une quelconque des revendications 10 à 16, **caractérisé en ce que** la commande de soupape est réalisée de telle manière qu'une seule roue (4, 6, 8, 10) est relevée dans un premier mode de fonctionnement et est abaissée dans un deuxième mode de fonctionnement.

19. Machine de construction routière selon la revendication 18, **caractérisé en ce que** une des roues avant uniquement (4, 6) est relevée dans un premier mode de fonctionnement et est abaissée dans un deuxième mode de fonctionnement.

20. Machine de construction routière selon la revendication 18, **caractérisé en ce que** la commande de soupape est réalisée de telle manière que la roue avant gauche et la roue avant droite (4, 6) ou la roue arrière gauche et la roue arrière droite (8, 10) ou les roues avant et arrière gauches (8, 4) ou les roues avant et arrière droites (10, 6) sont réglées en hauteur dans la même direction et avec une valeur identique.

21. Machine de construction routière selon l'une quelconque des revendications 10 à 20, **caractérisé en ce que** la commande de soupape peut fonctionner dans un mode de fonctionnement rétablissant le couplage forcé.
